# EUROPEAN PATENT SPECIFICATION

(11) **EP 3 019 062 B1**
(45) Date of publication and mention of the grant of the patent: **28.10.2020**
(21) Application number: 14716639.1
(22) Date of filing: 28.02.2014
(51) Int. Cl.: A47J 45/06, A47J 45/07

(54) **HANDLE FOR COOKING CONTAINERS COMPRISING A THERMOCHROMIC MEMBER**
GRIFF FÜR KOCHGEFÄSSE MIT EINEM THERMOCHROMEN ELEMENT
POIGNÉE POUR RÉCIPIENTS DE CUISSON COMPRENANT UN ÉLÉMENT THERMOCHROMIQUE

(30) Priority: 10.07.2013 IT VR20130031 U
(43) Date of publication of application: 18.05.2016
(73) Proprietor: TVS S.p.A., 61033 Fermignano (PS) (IT)
(72) Inventor: BERTOZZINI, Giuseppe Alberto, 61029 Urbino (PS) (IT)
(74) Representative: Feltrinelli, Secondo Andrea
(86) International application number: PCT/IB2014/059348
(87) International publication number: WO 2015/004542

(56) References cited:
- EP-A1- 1 411 804
- EP-A1- 2 606 791
- WO-A2-2012/082567
- CN-A- 101 904 693
- US-A1- 2006 225 502

## Description

### TECHNICAL FIELD OF THE INVENTION

The present invention refers to a handle for cooking containers, such as pots, pans, saucepans and the like, comprising a thermochromatic element.

In particular, the thermochromatic element comprises thermochromatic pigments and allows to evaluate the temperature of the container within a pre-established temperature range in a solution that is simple and inexpensive.

### STATE OF THE PRIOR ART

Various solutions for handles for cooking containers, such as pots, pans, saucepans and the like, provided with a temperature sensor for detecting the temperature of the container itself, are known.

The advantage of such sensors lies in the possibility of optimising the use of the container itself in that, by knowing the operating temperature, it is possible to avoid any overheating which could cause its damaging.

In addition, the use of temperature sensors allows to optimise the cooking of foods and to avoid reaching too high temperatures that could damage the foods themselves.

CN 101904693 A discloses a handle for cooking container comprising a thermochromatic temperature sensor.

The European patent EP 1411804 describes a handle for cooking containers comprising a thermochromatic sensor that can be integrated therein, wherein the sensor displays the temperature of the container through the use of liquid crystals applied to a sheet with high thermal conductivity.

The sheet is provided to be interposed between the body of the cooking container and the handle itself, at an appendix which projects from the cooking container referred to as "goujon".

A problem of this arrangement of the sheet between the "goujon" and the handle, lies in the fact that the contact of the strip with the "goujon" is not guaranteed and thus the passage of heat from the cooking container and the temperature sensor is not guaranteed.

Actually, the handle is provided to end up in abutment on the ferrule interposed between the external wall of the cooking container and the end of the handle or on other abutment elements arranged on the container.

The handle is never in abutment with the "goujon" and thus the sheet for the heat transfer to the temperature sensor must be kept in contact with the "goujon" using other means, for example using a special spring.

The presence of the spring complicates the mounting of the handle. In addition, the spring may lose tension due to the heat to which it is subjected and thus no longer guarantee the contact of the spring to the "goujon".

There is the need to improve such embodiment of a handle comprising a thermochromatic sensor through an extremely simple solution, that is inexpensive and easy to assemble.

The use of liquid crystals for displaying the temperature of the container actually determines production costs that at times may be high and which have considerable impact on the production costs of a handle provided with such a temperature sensor.

### OBJECTS OF THE INVENTION

Thus, an object of the present invention is that of improving the state of the prior art, by providing a handle for cooking containers comprising a thermochromatic sensor with particularly low production costs.

A further object of the present invention is to provide a handle for cooking containers comprising a thermochromatic sensor, the assemblying of which is extremely easy to perform, thus reducing the time required for the mounting thereof.

Another object of the present invention is to provide a handle for cooking containers comprising a thermochromatic temperature sensor that is capable of correctly detecting the temperature of the cooking container to which it is operatively associated also in presence of possible slight clearances between the handle and the container. According to the present invention a handle for cooking containers comprising a thermochromatic sensor according to claim 1 is provided.

The dependent claims refer to preferred and advantageous embodiments of the invention.

### BRIEF DESCRIPTION OF THE DRAWINGS

Further advantages and characteristics of the present invention shall be more apparent from the detailed description of a preferred but non-exclusive embodiment of a handle for cooking containers comprising a thermochromatic sensor, illustrated by way of non-limiting example, in the attached drawing tables wherein:

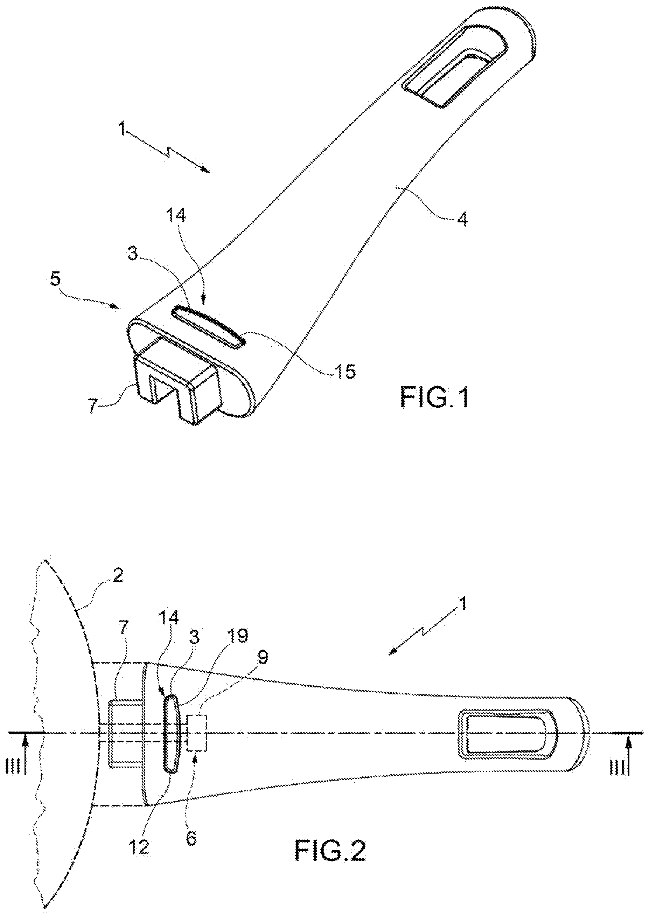

figure 1 is a perspective view of a handle comprising a thermochromatic sensor according to the present invention;
figure 2 is a top view of the handle comprising a thermochromatic sensor of figure 1;
figure 3 is a sectional side view obtained along the plane III-III of the handle comprising a thermochromatic sensor according to figure 2;
figure 4 is a further sectional side view of the handle of figure 3;
figure 5 is a detailed view of an enlarged detail of the handle of figure 3;
figure 6 is a detailed view of an enlarged detail of a further version of a handle comprising a thermochromatic sensor according to the present invention.

### EMBODIMENTS OF THE INVENTION

With reference to the attached figures, a handle for cooking containers 2 comprising a thermochromatic sensor 3 is indicated in its entirety with number 1. In particular, the handle 1 comprises a hand grip 4, adapted to allow the stable and safe gripping of a cooking container 2 by an user.

At the front portion 5 of the hand grip 4 means 6 for connecting the handle 1 to the edge of a cooking container 2 are provided.

The connection means 6 allow a removable connection of the handle 1 to the side wall of the cooking container 2 as better described hereinafter.

In particular, the connection means 6 comprise an appendix 7 which projects from the front portion 5 of the handle 1, provided with a through opening 8 for the insertion of a connection screw 9.

The connection screw 9 is provided to engage in a corresponding threaded seat, not illustrated in the figures, obtained in a block 10 projecting externally from the edge of the cooking container 2. Such block 10 is also referred to as "goujon".

The appendix 7 is substantially complementary to the block 10.

At the front portion 5 of the handle 1 a seat 11 is provided for housing the thermochromatic sensor 3.

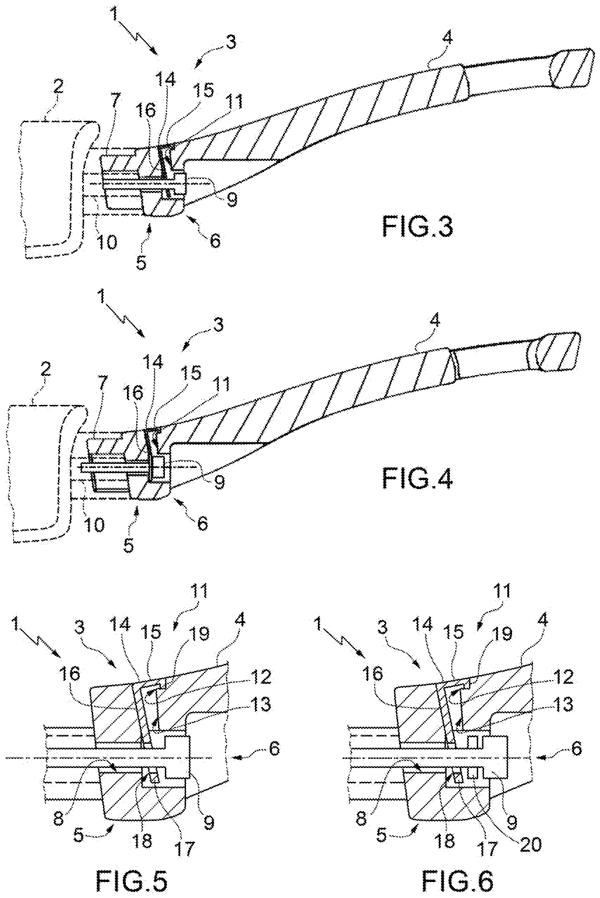

With reference to the view illustrated in figure 5, the seat 11 has a first portion 12, which partially extends into the upper portion of the handle 1, and a second portion 13 which extends passing through the handle 1.

The second portion 13 is in communication with the through opening 8 into which the connection screw 9 is introduced.

The thermochromatic sensor 3 consists of a metal sheet 14 with high thermal conductivity.

The metal sheet 14 is coated with thermochromatic pigments.

Such thermochromatic pigments may be chosen from various colours and with different heat sensitivity with the aim of being able to display predefined temperature ranges.

Thus, it is possible to realize various thermochromatic sensors 3 as a function of the cooking mode intended to be carried out, by simply coating the metal sheet 14 with specific thermochromatic pigments.

The metal sheet 14 has a first section 15, provided to be housed at the upper part along the handle 1, within the first portion 12 of the seat 11, and a second section 16, provided to be housed in the handle 1, along the second portion 13 of the seat 11.

In particular, since the first section 15 is positioned along the upper portion of the handle 1, it is visible to a user during the use of the handle 1.

In a version of the present invention, the first section 15 can have an edge folded inwards at its end 19.

Such edge is in abutment against the perimeter of the portion of the seat 11 obtained at the upper part on the handle 1.

In a version of the present invention it is observed that the first section 15 is within the overall dimensions of the handle 1, without exiting therefrom at the upper part.

The metal sheet 14 does not have edges projecting with respect to the upper portion of the handle 1 which could hinder the firm gripping of the handle 1 by the user or, even, get caught for example in the clothes with hazardous consequences.

In a further version of the present invention, the first section 15 may have at least one rounding and/or a fold and/or a relief element projecting at the upper part from the overall dimensions of the handle 1.

The second section 16 of the metal sheet 14 has, at an end 17 which is arranged inside the handle 1, an opening 18.

When the metal sheet 14 is inserted into the second portion 13 of the seat 11, the through opening 8 obtained along the handle 1 is substantially within the edge of the opening 18 of the metal sheet 14. Before proceeding with the connection of the handle 1 to the cooking container 2, the metal sheet 14 is positioned into the seat 11.

Subsequently, the connection means 6 are positioned at the block 10 of the cooking container 2 and, thus, the connection screw 9 is introduced through the opening 18 of the metal sheet 14 and along the through opening 8.

Once the handle 1 is connected to the cooking container 2, the metal sheet 14 is firmly interposed between the handle 1 and the head of the connection screw 9.

The metal sheet 14 is thus in thermal contact with the cooking container 2 through the connection screw 9.

In particular, the head of the connection screw 9, which abuts against the metal sheet 14, determines the thermal contact between the metal sheet 14 and the cooking container 2.

Thus, the heating of the container 2 determines the heating of the block 10 in which the connection screw 9 is inserted, the connection screw 9 which is heated in turn.

The heating of the connection screw 9 determines the heating of the metal sheet 14 which causes a chromatic variation of the thermochromatic pigments with which the latter is coated.

This way the user is signalled the reaching of a pre-established temperature of the cooking container 2.

The connection of the thermochromatic sensor 3 to the handle 1 is easy and quick to perform, thus allowing to reduce the mounting times.

Actually, connecting the thermochromatic sensor 3 to the handle 1 requires only introducing it into the seat 11 and then locking it by means of the connection screw 9.

The thermal contact between the thermochromatic sensor 3 and the cooking container 2 is always guaranteed through the correct fastening of the connection screw 9. Contrary to the prior art, there is no need of verifying whether thermochromatic sensor 3 is positioned correctly in abutment against the outer wall of the cooking container 2; anyway, this operation is not easy to actuate, given that such part is hidden by the handle or by the ferrule. During the connection of the handle 1 to the cooking container 2, the metal sheet 14 is pressed against the second portion of the seat 13, at the through opening 8, through the screw 9.

The connection screw 9 determines a slight elastic deformation of the metal sheet 14.

In presence of an elastic deformation, the elastic return of the metal sheet 14 in the non-deformed configuration presses it against the head of the connection screw 9, thus guaranteeing the contact between the connection screw 9 and the metal sheet 14 even in case of possible loosening of the connection screw 9.

Thus, should the connection screw 9 loosen, thus determining a slight clearance between the handle 1 and the cooking container 2, the thermochromatic sensor 3 is nevertheless capable of detecting and displaying the pre-established temperature of the cooking container 2, thus overcoming a drawback of the prior art.

Furthermore, it should be observed that due to the elastic deformation the metal sheet 14, once the connection screw 9 is connected to the block 10, it may serve as an anti-unscrewing element of the connection screw 9, acting analogously to a conventional elastic washer. According to a further embodiment of the present invention, illustrated in figure 6, a washer 20, of the anti-unscrewing type, interposed between the connection screw 9 and the metal sheet 14, may be possibly provided.

The washer 20 is made of a material with high thermal conductivity and, thus, it allows to efficiently propagate the heat of the connection screw 9 to the metal sheet 14.

With respect to the previous version, in which the head of the connection screw 9 is arranged directly in contact with the metal sheet 14, the washer 20 allows to propagate heat to the metal sheet 14 through a larger surface.

In a further version, not illustrated in the figures, the connection screw 9 may have a head of enlarged dimensions for increasing the surface of heat exchange with the metal sheet 14 or with a washer 20, should the latter be possibly provided in interposed position between the connection screw 9 and the metal sheet 14.

The thermochromatic sensor 3 allows the display of a pre-established temperature of the cooking container 2 and, in addition, a stable connection between the handle 1 and the cooking container 2.

As indicated above, the positioning of the thermochromatic sensor 3 according to the present invention, i.e. in interposed position between the handle 1 and the connection screw 9, allows a correct heat connection between the cooking container 2 and the thermochromatic sensor 3 at all times.

With respect to the solutions of the prior art, in which the temperature sensor is interposed in the space present between the cooking container and the front end of the handle, in the present invention the thermochromatic sensor 3 is always arranged in thermal contact with the cooking container 2 through the connection screw 9.

In addition, given that the portion of the thermochromatic sensor 3 in contact with the connection screw 9 is easily visible from outside, it is possible to easily verify the tightness of the mutual connection therebetween.

Contrary to the solutions of the prior art, it is also observed that the presence of a space between the front end of the handle 1 and the outer wall of the cooking container 2 does not affect the correct operation of the thermochromatic sensor 3 in any manner.

The invention thus conceived can be subjected to many modifications and variants all falling within the scope of protection of the invention as defined by the appended claims.

In addition, all details can be replaced by other technically equivalent elements. In practice, the materials used, as well as contingent shapes and dimensions, may vary depending on the technical requirements without departing from the scope of protection of the claims that follow.

## Claims

1. Handle (1) connectable to a cooking container (2), such as a pot, a pan, a saucepan and similar containers, said handle (1) comprising a screw for connection (9) to said cooking container (2), for a removable connection of said handle (1) to said cooking container (2), and a thermochromatic sensor (3) arranged at a front portion (5) of said handle (1), said thermochromatic sensor (3) comprising a metal sheet (14) positionable into a seat (11) obtained at said front portion (5) of said handle (1), said metal sheet (14) being in interposed position between said handle (1) and said connection screw (9), wherein said metal sheet (14) comprises a first section (15) and a second section (16), said first section (15) being visible at the upper part on said handle (1) and said second section (16) being housed in said handle (1), along said seat (11), said handle (1) **being characterised in that** said metal sheet (14) is arranged into said seat (11) so that with said connection screw (9) connected to said block (10) said second section (16) of said metal sheet (14) is deformed in an elastic way by the head of said connection screw (9) against said seat (11).

2. Handle (1) according to claim 1, wherein said connection screw (9) is inserted into said handle (1) passing through an opening (8), said opening (8) being in communication with said seat (11).

3. Handle (1) according to one of the preceding claims, wherein said metal sheet (14) has an end (17), arranged in said seat (11), said end having an opening (18) for the passage of the shank of said connection screw (9).

4. Handle (1) according to the preceding claim, wherein said end (17) is fastened in abutment against said seat (11) through said connection screw (9).

5. Handle (1) according to claim 3, wherein said end (17) is in thermal contact with said connection screw (9).

6. Handle (1) according to claim 1, wherein said metal sheet (14) has an edge (19), folded inwards, at said first section (15), said edge (19) being in abutment against one first portion (12) of said seat (11), for the stable positioning of said first section (15) at the upper part on said handle (1).

7. Handle (1) according to one of the preceding claims, wherein said connection screw (9) has a head of enlarged dimensions, adapted to grant an efficient heat exchange between said connection screw (9) and said metal sheet (14).

8. Handle (1) according to one of the preceding claims, wherein a washer (20) is provided in interposed position between said connection screw (9) and said metal sheet (14).

9. Handle (1) according to the preceding claim, wherein said washer (20) is made of a material with high thermal conductivity.

## Patentansprüche

1. Handgriff (1), verbindbar mit einem Kochbehälter (2), beispielsweise einem Kochtopf, einer Pfanne, einem Schmortopf und ähnlichen Behältern, wobei der besagte Handgriff (1) eine Schraube zur Verbindung (9) mit dem besagten Kochbehälter (2), für eine lösbare Verbindung des besagten Handgriffs (1) mit dem besagten Kochbehälter (2), und einen thermochromatischen Sensor (3), der an einem vorderen Abschnitt (5) des besagten Handgriffs (1) angeordnet ist, umfasst, wobei der besagte thermochromatische Sensor (3) ein Metallblech (14) umfasst, das in einer Aufnahme (11) positionierbar ist, die an dem besagten vorderen Abschnitt (5) des besagten Handgriffs (1) erhalten wird, wobei sich das besagte Metallblech (14) in einer Zwischenposition zwischen dem besagten Handgriff (1) und der besagten Verbindungsschraube (9) befindet, worin das besagte Metallblech (14) einen ersten Abschnitt (15) und einen zweiten Abschnitt (16) umfasst, wobei der erste Abschnitt (15) am oberen Teil an dem besagten Handgriff (1) sichtbar ist und der besagte zweite Abschnitt (16) in dem besagten Handgriff (1) entlang der besagten Aufnahme (11) untergebracht ist, wobei der besagte Handgriff (1) **dadurch gekennzeichnet ist, dass** das besagte Metallblech (14) so in der besagten Aufnahme (11) angeordnet ist, dass, wenn die besagte Verbindungsschraube (9) mit dem besagten Block (10) verbunden ist, der besagte zweite Abschnitt (16) des besagten Metallblechs (14) durch den Kopf der besagten Verbindungsschraube (9) in elastischer Weise gegen die besagte Aufnahme (11) verformt wird.

2. Handgriff (1) nach Anspruch 1, worin die besagte Verbindungsschraube (9) in den besagten Handgriff (1) durch eine Öffnung (8) hindurch eingeführt wird, wobei die besagte Öffnung (8) mit der besagten Aufnahme (11) in Verbindung steht.

3. Handgriff (1) nach einem der vorangegangenen Ansprüche, worin das besagte Metallblech (14) ein Ende (17) aufweist, das in der besagten Aufnahme (11) angeordnet ist, wobei das besagte Ende eine Öffnung (18) für den Durchgang des Schafts der besagten Verbindungsschraube (9) aufweist.

4. Handgriff (1) nach dem vorangegangenen Anspruch, worin das besagte Ende (17) anliegend gegen die besagte Aufnahme (11) durch die besagte Verbindungsschraube (9) befestigt ist.

5. Handgriff (1) nach Anspruch 3, worin das besagte Ende (17) in thermischem Kontakt mit der besagten Verbindungsschraube (9) steht.

6. Handgriff (1) nach Anspruch 1, worin das besagte Metallblech (14) eine nach innen gefaltete Kante (19) an dem besagten ersten Abschnitt (15) aufweist, wobei die besagte Kante (19) gegen einen ersten Abschnitt (12) der besagten Aufnahme (11) anliegt, um den besagten ersten Abschnitt (15) stabil am oberen Teil am besagten Handgriff (1) zu positionieren.

7. Handgriff (1) nach einem der vorangegangenen Ansprüche, worin die besagte Verbindungsschraube (9) einen Kopf mit vergrößerten Abmessungen aufweist, der geeignet ist, einen effizienten Wärmeaustausch zwischen der besagten Verbindungsschraube (9) und dem besagten Metallblech (14) zu gewährleisten.

8. Handgriff (1) nach einem der vorangegangenen Ansprüche, worin eine Unterlegscheibe (20) in Zwischenposition zwischen der besagten Verbindungsschraube (9) und dem besagten Metallblech (14) vorgesehen ist.

9. Handgriff (1) nach dem vorangegangenen Anspruch, worin die besagte Unterlegscheibe (20) aus einem Material mit hoher Wärmeleitfähigkeit hergestellt ist.

## Revendications

1. Poignée (1) pouvant être raccordée à un récipient de cuisson (2), tel qu'un pot, une casserole, une poêle et des récipients similaires, ladite poignée (1) comprenant une vis de raccordement (9) audit récipient de cuisson (2), pour un raccordement amovible de ladite poignée (1) audit récipient de cuisson (2), et un capteur thermochromatique (3) disposé sur une partie frontale (5) de ladite poignée (1), ledit capteur thermochromatique (3) comprenant une tôle métallique (14) positionnable dans un siège (11) obtenu sur ladite partie frontale (5) de ladite poignée (1), ladite tôle métallique (14) étant en position intercalée entre ladite poignée (1) et ladite vis de raccordement (9), dans laquelle ladite tôle métallique (14) comprend une première section (15) et une deuxième section (16), ladite première section (15) étant visible sur la partie supérieure sur ladite poignée (1) et ladite deuxième section (16) étant contenue dans ladite poignée (1), le long dudit siège (11), ladite poignée (1) étant **caractérisée en ce que** ladite tôle métallique (14) est disposée dans ledit siège (11) de telle sorte qu'avec ladite vis de raccordement (9) raccordée audit bloc (10) ladite deuxième section (16) de ladite tôle métallique (14) est déformée de manière élastique par la tête de ladite vis de raccordement (9) contre ledit siège (11).

2. Poignée (1) selon la revendication 1, dans laquelle ladite vis de raccordement (9) est insérée dans ladite poignée (1) en traversant une ouverture (8), ladite ouverture (8) étant en communication avec ledit siège (11) .

3. Poignée (1) selon l'une des revendications précédentes, dans laquelle ladite tôle métallique (14) a une extrémité (17), disposée dans ledit siège (11), ladite extrémité ayant une ouverture (18) pour le passage de la tige de ladite vis de raccordement (9).

4. Poignée (1) selon la revendication précédente, dans laquelle ladite extrémité (17) est fixée en butée contre ledit siège (11) par ladite vis de raccordement (9) .

5. Poignée (1) selon la revendication 3, dans laquelle ladite extrémité (17) est en contact thermique avec ladite vis de raccordement (9).

6. Poignée (1) selon la revendication 1, dans laquelle ladite tôle métallique (14) a un bord (19), replié vers l'intérieur, au niveau de ladite première section (15), ledit bord (19) étant en butée contre une première partie (12) dudit siège (11), pour le positionnement stable de ladite première section (15) sur la partie supérieure sur ladite poignée (1).

7. Poignée (1) selon l'une des revendications précédentes, dans laquelle ladite vis de raccordement (9) a une tête de dimensions agrandies, adaptée pour assurer un échange thermique efficace entre ladite vis de raccordement (9) et ladite tôle métallique (14).

8. Poignée (1) selon l'une des revendications précédentes, dans laquelle une rondelle (20) est intercalée entre ladite vis de raccordement (9) et ladite tôle métallique (14).

9. Poignée (1) selon la revendication précédente, dans laquelle ladite rondelle (20) est constituée d'une matière ayant une conductivité thermique élevée.
